# EUROPÄISCHE PATENTANMELDUNG

(11) **EP 4 549 869 A1**
(43) Veröffentlichungstag der Anmeldung: **07.05.2025**
(21) Anmeldenummer: 24205845.1
(22) Anmeldetag: 10.10.2024
(51) Int. Cl.: F28F 3/12, F28F 3/14, H01M 10/613, H01M 10/625

(54) **KÜHLPLATTE UND VERFAHREN ZUR HERSTELLUNG EINER KÜHLPLATTE**

(30) Priorität: 06.11.2023 DE 102023130623
(71) Anmelder: Benteler Automobiltechnik GmbH, 33102 Paderborn (DE)
(72) Erfinder: Fortmeier, Günter, 33129 Delbrück (DE); Düpmeier, Tobias, 33100 Paderborn (DE); Grewe, Jochem, 33154 Salzkotten (DE); Grußmann, Elmar, 33184 Altenbeken (DE); Rusche, Ulrich, 59457 Werl (DE)
(74) Vertreter: Ksoll, Peter

(57) **Zusammenfassung**

Eine Kühlplatte 1 zur Batteriekühlung eines Kraftfahrzeugs besitzt einen Plattenkörper 2 aus zwei löttechnisch miteinander gefügten Plattenelementen 3, 4 und zumindest einen Kühlkanal 5 zur Durchleitung eines Kühlfluids sowie eine Versteifungsausformung 6. Der Kühlkanal 5 und die Versteifungsausformung 6 sind bei der Herstellung des Plattenkörpers 2 zunächst gemeinsam durchgehend ausgebildet, indem ein Kanal in einem Plattenelement 3, 4 durch Innenhochdruckumformung ausgebildet wird. Im Lötprozess wird ein Kanalabschnitt 7 des Kanals 11 durch ein Verschlusselement 8 in Form einer Presslötfügung 9 fluiddicht verschlossen. Hierdurch wird der Kanal 11 in einen Kühlkanal 5 und eine Versteifungsausformung 6 getrennt.

## Beschreibung

Die Erfindung betrifft eine Kühlplatte zur Batteriekühlung, insbesondere zur Kühlung einer Batterie von Kraftfahrzeugen sowie ein Verfahren zur Herstellung von Kühlplatten.

In Elektro- oder Hybridfahrzeugen kommen Hochvoltbatteriesysteme zur Anwendung. Zur Sicherung von Reichweite, Fahrleistung und Ladeleistung ebenso wie der Lebensdauer von elektrisch angetriebenen Fahrzeugen ist ein definiertes Thermomanagement der Batterien erforderlich. Die Batterien sind empfindlich im Hinblick auf eine unterschiedliche Temperaturverteilung, wodurch es zu einer Überhitzung und einem vorzeitigen Altern kommen kann. Um die Batterien in einem optimalen Temperaturbereich zu halten, kommen Kühlvorrichtungen zum Einsatz, die sicherstellen, dass überschüssige Abwärme, die beim Betreiben der Batterien entstehen von den Batterien abgeführt und die Batterien auf einem gleichmäßigen Temperaturniveau temperiert werden.

Zur Kühlung von Batterien bzw. Batteriemodulen werden Kühlplatten eingesetzt, die oberhalb, seitlich und/oder unterhalb der Batterien angeordnet werden und diese direkt oder indirekt kontaktieren. Die Kühlplatten werden von einem Kühlfluid durchflossen. Solche Kühlplatten bestehen üblicherweise aus zwei Plattenelementen, die zusammengesetzt zu einem Plattenkörper einen oder mehrere dazwischenliegende Kühlkanäle begrenzen. Üblicherweise sind die Kühlplatten aus Leichtmetallblechen, insbesondere Aluminiumblechen gefertigt.

Durch DE 10 2008 059 955 B4 zählt eine Kühlplatte und ein Verfahren zur Herstellung einer Kühlplatte mit einem integrierten Kühlkanal zum Stand der Technik. Die Kühlplatte weist einen aus zwei Plattenelementen gebildeten Plattenkörper auf, mit Anschlüssen für ein Kühlfluid. In einem Plattenelement der Kühlplatte ist ein Kühlkanal mittels einer spanlosen Umformtechnik ausgeformt. Das mit dem Kühlkanal versehene Plattenelement wird durch das zweite ebene Plattenelement verschlossen.

Vergleichbar aufgebaute Kühlplatten gehen aus der DE 10 2011 106 662 A1 und der DE 10 2011 107 607 A1 hervor. Dort sind die Kühlplatten bzw. deren Plattenkörper mit Versteifungselementen in Form von Steifigkeitsausformungen bzw. kühlmittelfreien Hohlräumen versehen. Hierdurch erfolgt eine zusätzliche Versteifung der Kühlplatten.

Der Erfindung liegt ausgehend vom Stand der Technik die Aufgabe zugrunde, eine funktional und herstellungstechnisch verbesserte Kühlplatte zu schaffen sowie ein rationelles Verfahren zur Herstellung einer Kühlplatte aufzuzeigen.

Die Lösung des gegenständlichen Teils der Aufgabe besteht in einer Kühlplatte gemäß den Merkmalen von Anspruch 1.

Der verfahrensmäßige Teil der Aufgabe wird durch ein Verfahren von Anspruch 6 gelöst.

Vorteilhafte Ausgestaltungen und Weiterbildungen der Erfindung sind Gegenstand der abhängigen Ansprüche.

Eine Kühlplatte weist einen aus zwei Plattenelementen gebildeten Plattenkörper auf. Über Anschlussstutzen erfolgt die Zuleitung und Ableitung eines Kühlfluids. Die Anschlussstutzen sind mit dem Plattenkörper bzw. dessen Plattenelementen stoffschlüssig gefügt. Bei den Plattenelementen handelt es sich insbesondere um eine Kanalplatte und eine Bodenplatte, welche zu einem Plattenstapel zusammengeführt und miteinander gefügt den Plattenkörper bilden. Die Plattenelemente bestehen aus Leichtmetall oder einer Leichtmetalllegierung, insbesondere einer Aluminiumlegierung. Zumindest ein Plattenelement des Plattenkörpers der Kühlplatte weist eine Kanalstruktur zur Durchleitung eines Kühlfluids auf. Die Plattenelemente sind mittels Presslöten stoffschlüssig gefügt. Der Lötvorgang wird in einem Formlötwerkzeug durchgeführt. Hierzu wird ein aus den beiden Plattenelementen gebildeter Plattenstapel in dem Formlötwerkzeug eingespannt, aneinander gepresst und auf eine Temperatur oberhalb der Schmelztemperatur des zwischen den Plattenelementen applizierten Lotwerkstoff aufgeheizt, so dass der Lotwerkstoff durch Schmelzen in eine flüssige Phase übergeht und nach dem Erstarren des Lotwerkstoffs eine stoffschlüssige Verbindung der Plattenelemente an den aneinander liegenden Fügeflächen entsteht.

Zur Ausbildung eines oder mehrerer Kanäle in zumindest einem der Plattenelemente werden die Plattenelemente in dem Formlötwerkzeug eingespannt und ein Zwischenraum zwischen den Plattenelementen mit Innendruck beaufschlagt. Hierzu wird ein Wirkmedium in den Zwischenraum geleitet und eine Kanalstruktur mit zumindest einem Kanal oder mehreren Kanälen innenhochdrucktechnisch erzeugt.

Eine erfindungsgemäße Kühlplatte zur Batteriekühlung besitzt einen Plattenkörper, welcher aus zwei löttechnisch miteinander gefügten Plattenelementen gebildet ist. Der Plattenkörper weist eine Kanalstruktur mit zumindest einem Kühlkanal zur Durchleitung eines Kühlfluids sowie zumindest eine Versteifungsausformung auf. Die Versteifungsausformung dient zur Versteifung des Plattenkörpers und verbessert die Formstabilität der Kühlplatte. Eine hohe Formstabilität stellt einen guten Kontakt der Kühlplatte zu den Batteriemodulen sicher. Dies ist für das Thermomanagement vorteilhaft. Positiv wirkt sich eine hohe Formstabilität der Kühlplatten auch bei einer Crashbelastung aus, ebenso wie beim Handling im Zusammenbauprozess der Batterieanordnung und des Kühlsystems.

Erfindungsgemäß ist ein Kanalabschnitt zwischen dem Kühlkanal und der Versteifungsausformung durch ein Verschlusselement fluiddicht verschlossen.

Die Versteifungsausformung ist vorzugsweise durch eine rinnen- oder sickenförmige Ausformung in zumindest einem Plattenelement gebildet. Die Versteifungsausformung ist gemeinsam mit dem Kühlkanal bei der innenhochdrucktechnischen Ausformung hergestellt. Durch das Verschlusselement wird der zwischen den Plattenelementen ausgebildete Kanal in einen Kühlkanal und eine Versteifungsausformung getrennt. Auf diese Weise wird eine funktional und herstellungstechnische verbesserte Kühlplatte geschaffen. Die Herstellung der Kühlplatten und insbesondere der Versteifungsstrukturen mit den Versteifungsausformungen in der Kühlplatte ist rationell, kostengünstig und bauraumsparend. Durch Anordnung und Geometrie der Versteifungsausformung, insbesondere von mehrere Versteifungsausformungen, die eine Versteifungsstruktur bilden, wird eine hohe Formstabilität der Kühlplatte sichergestellt mit bauteilgerecht hoher Steifigkeit gegenüber dem Gewicht der Batterie bzw. den Batteriemodulen sowie den im Fahrbetrieb auftretenden Belastungen und einwirkenden Kräften.

Die Versteifungsausformungen sind nicht von Kühlmittel durchflossen. Der Kühlmitteldurchfluss ist durch das Verschlusselement fluiddicht getrennt. Vorteilhafterweise sind in einer Versteifungsausformung eine oder mehrere Öffnungen vorgesehen. Hierbei handelt es sich um Funktionsöffnungen, durch welche die Versteifungsausformungen belüftet werden oder die zur Befestigung dienen, beispielsweise zur Verbindung der Kühlplatte mit einem Bodenblech.

Ein Verfahren zur Herstellung einer Kühlplatte weist folgende Schritte auf:
- Bereitstellen eines Plattenstapels, welcher aus zumindest zwei Plattenelementen aus einem metallischen Werkstoff mit einem zwischen den Plattenelementen angeordneten Lotwerkstoff gebildet wird;
- Einlegen des Plattenstapels in ein beheiztes Formlötwerkzeug, welches ein Unterwerkzeug und ein Oberwerkzeug aufweist;
- Zufahren des Formwerkzeugs, wobei das Unterwerkzeug und das Oberwerkzeug relativ auf einander zu verlagert werden;
- Schließen des Formlötwerkzeus und Einklemmen des Plattenstapels zwischen dem zwischen dem Unterwerkzeug und dem Oberwerkzeug;
- Aufheizen des Plattenstapels;
- Beaufschlagung eines Zwischenraums zwischen den Plattenelementen des Plattenstapels mit Innendruck durch Einleiten eines Wirkmediums in den Zwischenraum und Ausbilden eines Kanals in zumindest einem Plattenelement;
- Schmelzen des Lotwerkstoffs zwischen den Plattenelementen und löttechnische Fügung der Plattenelemente an in Anlage befindlichen Fügeflächen;
- wobei ein Verschlusselement erzeugt wird durch welches der Kanal in einen Kühlkanal und eine Versteifungsausformung getrennt wird;
- Öffnen des Formlötwerkzeugs und Entnahme der Kühlplatte aus dem Form lötwerkzeug.

Das Verschlusselement ist durch eine Presslötfügung im Lötprozess erzeugt. Hierbei wird das Verschlusselement in einem Kanalabschnitt des innenhochdrucktechnisch erzeugten Kanals ausgebildet. Es können mehrere Versteifungsausformungen erzeugt werden. Entsprechend sind mehrere Kanalabschnitte jeweils durch ein Verschlusselement geschlossen, wodurch jeweils eine Versteifungsausformung von dem oder den Kühlkanälen getrennt werden.

Vor der fluiddichten Trennung des Kühlkanals und der Versteifungsausformung sind diese über den Kanalabschnitt verbunden. Der Kanalabschnitt ist Bestandteil des hydroformtechnisch ausgebildeten Kanals. Der Kanalabschnitt kann geometrisch kleiner ausgeführt sein als ein Kühlkanal und/oder eine Versteifungsausformung. Insbesondere kann der Kanalabschnitt einen geringeren Querschnitt aufweisen als ein Kühlkanal oder eine Versteifungsausformung. Der Kanalabschnitt wird durch das Verschlusselement fluiddicht verschlossen.

Vorzugsweise wird in einer Versteifungsausformung eine Öffnung erzeugt, so dass diese belüftet ist. Die Öffnung kann im Formlötwerkzeug erzeugt werden. Vorzugsweise werden eine oder mehrere Öffnungen in einer Versteifigkeitsausformung im Anschluss an die Kühlplattenfertigung außerhalb des Formlötwerkzeugs hergestellt.

Das Formlötwerkzeug ist auf Werkzeugtemperatur aufgeheizt bei der sowohl der Innenhochdruckformvorgang als auch der löttechnische Fügeprozess durchgeführt wird. Insbesondere beträgt die Werkzeugtemperatur zwischen 540° C und 670° C, besonders vorteilhaft liegt die Werkzeugtemperatur zwischen 550° C und 640° C.

Besonders vorteilhaft erstrecken sich mehrere Versteifungsausformungen, insbesondere Versteifungssicken, parallel zu einem Kühlkanal, einem Kühlkanalabschnitt, einer Kühlkanalstruktur oder mehreren Kühlkanälen.

Beim Herstellen der Lötverbindung zwischen den Plattenelementen wird der Kanalabschnitt während des Lötprozesses verschlossen, in dem ein Stempel im Formlötwerkzeug den Kanalabschnitt zudrückt, so dass dieser ebenfalls verlötet wird. Hierdurch wird eine vom Kühlkanal getrennte Versteifungsausformung mit einer Hohlkammer geschaffen, die im Betrieb nicht mit Kühlfluid durchströmt wird aber die Bauteilsteifigkeit erhöht.

Eine vorteilhafte Ausbildung des erfindungsgemäßen Verfahren sieht vor, dass der Schließvorgang des Formlötwerkzeugs vor Erreichen der Schließposition unterbrochen wird. Das Oberwerkzeug und das Unterwerkzeug sind bei eingelegtem Plattenstapel in dieser Halteposition in einem Abstand zueinander positioniert. Die Halteposition wird für eine Haltezeit gehalten. Hierbei erfolgt eine Aufheizung des auf dem Unterwerkzeug aufliegenden Plattenstapels. Im Anschluss an die Haltezeit wird die Schließbewegung fortgesetzt, das Formlötwerkzeug geschlossen und der Plattenstapel zwischen dem Unterwerkzeug und dem Oberwerkzeug eingespannt. Im Formlötwerkzeug eingespannt erfolgt eine weitere Aufheizung des Plattenstapels bis auf Löttemperatur.

Die Erfindung ist nachfolgend anhand einer Zeichnung näher beschrieben.

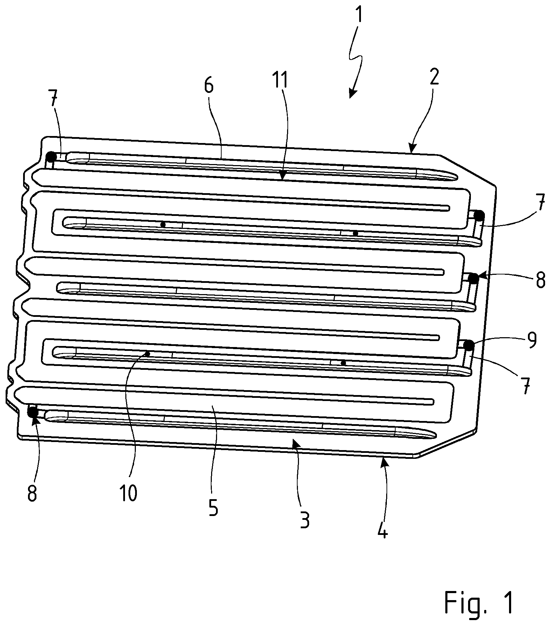

Die Figur 1 zeigt eine erfindungsgemäße Kühlplatte in einer perspektivischen Darstellung.

Eine Kühlplatte 1 dient zur Batteriekühlung, insbesondere einer Fahrzeugbatterie eines Kraftfahrzeugs.

Die Kühlplatte 1 weist einen Plattenkörper 2 auf, der aus zwei Plattenelementen 3, 4 gebildet ist. Bei dem in Bildebene vorderen Plattenelement 3 handelt es sich um eine Kanalplatte, die eine Kanalstruktur mit mindestens einem Kühlkanal 5 aufweist. Bei dem hinteren in der Figur angedeuteten Plattenelement 4 handelt es sich um eine üblicherweise vollständig oder nahezu vollständig ebene Bodenplatte.

Die beiden Plattenelemente 3, 4 sind flächig aufeinander positioniert und bilden den Plattenkörper 2. Die aneinander liegenden Flächen der Plattenelemente 3, 4 sind ganz oder bereichsweise mit einem Lotwerkstoff versehen. Insbesondere ist ein Lotwerkstoff in Form einer plattierten Lotschicht auf einem der Plattenelemente 3, 4 vorappliziert.

Die aneinander liegenden Flächen der Plattenelement 3, 4 sind ganz oder bereichsweise miteinander gefügt. An dem Plattenkörper 2 sind in der Figur 1 nicht dargestellte Anschlussstutzen für ein Kühlfluid angeschlossen. Die Anschlussstutzen dienen zur Zuleitung und Ableitung eines Kühlfluids.

Der Plattenkörper 2 weist eine Versteifungsstruktur mit einer, vorzugsweise mehreren Versteifungsausformungen 6 auf. Eine Versteifungsausformung 6 ist insbesondere in Form einer Versteifungssicke ausgeführt. Eine Versteifungsausformung 6 und ein Kühlkanal 5 waren ursprünglich über einen Kanalabschnitt 7 verbunden. Der Kanalabschnitt 7 zwischen dem Kühlkanal 5 und der Versteifungsausformung 6 ist durch ein Verschlusselement 8 fluiddicht verschlossen. Das Verschlusselement 8 ist durch eine Presslötfügung 9 gebildet.

In einer Versteifungsausformung 6 sind eine oder mehrere Öffnungen 10 vorgesehen. Die Öffnungen 10 dienen zur Belüftung der Versteifungsausformung 6 oder zur Befestigung an oder mit Funktionsbauteilen und sind im Anschluss an die Herstellung der Kühlplatte 1 bzw. des Plattenkörpers 2 erzeugt.

Der Kühlkanal 5, die Versteifungsausformungen 6, die Kanalabschnitte 7 und die einen Kanalabschnitt 7 fluiddicht verschließenden Verschlusselemente 8 sind bei der Herstellung einer Kühlplatte 1 bzw. des Plattenkörpers 2 hergestellt.

Zur Herstellung einer Kühlplatte 1 wird ein Plattenstapel bestehend aus zumindest zwei anfangs ebenen Plattenelementen 3, 4 aus einer Aluminiumlegierung bereitgestellt. Zwischen den Plattenelementen 3, 4 ist ein Lotwerkstoff appliziert, wobei der Lotwerkstoff in Form einer plattierten Lotschicht auf zumindest eines der Plattenelemente 3, 4 aufgebracht ist.

Der Plattenstapel wird in ein beheiztes Formlötwerkzeug eingelegt.

Das Formlötwerkzeug weist ein Unterwerkzeug und ein Oberwerkzeug auf. Diese werden bei der Schließbewegung des Formlötwerkzeugs relativ zueinander verlagert. Insbesondere wird das Oberwerkzeug auf das Unterwerkzeug abgesenkt. Zur Aufheizung des Plattenstapels wird die Schließbewegung unterbrochen. Das Oberwerkzeug und das Unterwerkzeug befinden sich in einem geringen Abstand zueinander. Der Abstand beträgt wenige Zentimeter. Der Plattenstapel liegt lose auf dem Unterwerkzeug auf und wird vorgeheizt. Nach dieser Aufheizphase, die eine Dauer von länger als 5 Sekunden und vorzugsweise weniger 1 Minute haben kann, insbesondere zwischen 10 und 30 Sekunden beträgt, wird das Formlötwerkzeug durch Absenken des Oberwerkzeugs auf das Unterwerkzeugs vollständig geschlossen. Dabei wird der Plattenstapel zwischen dem Unterwerkzeug und dem Oberwerkzeug aufgenommen und eingeklemmt. Der Plattenstapel gelangt dabei in Flächenkontakt zwischen dem Unterwerkzeug und dem Oberwerkzeug und wird im Formlötwerkzeug weiter aufgeheizt. Das Formlötwerkzeug ist auf eine Werkzeugtemperatur aufgeheizt, bei der sowohl der Umformvorgang als auch der löttechnische Fügevorgang durchgeführt wird. Insbesondere beträgt die Werkzeugtemperatur zwischen 540° C und 670° C, besonders vorteilhaft liegt die Werkzeugtemperatur zwischen 550° C und 640° C.

Ein Zwischenraum zwischen den Plattenelementen 3, 4 des Plattenstapels wird mit Innendruck beaufschlagt. Ein Zwischenraum ist ein Bereich zwischen aneinander liegenden Plattenelementen, wobei nicht notwendigerweise ein Spalt zwischen Plattenelementen im Bereich des Zwischenraumes vorhanden sein muss. Die Beaufschlagung des Zwischenraumes mit einem Innendruck erfolgt durch Einleiten eines Wirkmediums, insbesondere Stickstoff, in den Zwischenraum. Hierbei wird ein Kanal 11 durch innendrucktechnische Umformung zumindest eines Plattenelementbereichs in eine Kanalkavität in einer oder den Kontaktflächen des Formlötwerkzeugs ausgebildet. Die Zuleitung des Wirkmediums erfolgt bevorzugt über einen der Anschlussstutzen des Plattenstapels oder einen externen Anschlussadapter.

Der Lotwerkstoff zwischen den Plattenelementen 3, 4 wird infolge der Werkzeugtemperatur des Formlötwerkzeugs geschmolzen. Die Plattenelemente 3, 4 untereinander sowie fügegerecht positionierte Anschlussstutzen werden löttechnisch gefügt.

Beim Herstellen der presslöttechnischen Fügung der Plattenelemente 3, 4 werden Kanalabschnitte 7 des Kanals 11 durch ein Verschlusselement 8 in Form einer Presslötfügung 9 verschlossen. Hierdurch wird der innenhochdrucktechnisch durchgehend erzeugte Kanal 11 in den Kühlkanal 5 und die Versteifungsausformungen 6 getrennt. Über den Kanalabschnitt 7 waren der Kühlkanal 5 und die Versteifungsausformungen 6 während der Innenhochdruckumformung verbunden. Diese Verbindungen bzw. die Kanalabschnitte 2 werden während des Lötprozesses durch Verschlusselemente 8 verschlossen. Hierzu werden Presslötfügungen 9 in den Kanalabschnitten 7 erzeugt, indem ein Stempel im Formlötwerkzeug den Kanalabschnitt 7 zudrückt, so dass dieser ebenfalls verlötet wird. Auf diese Weise werden der bzw. die Kühlkanäle 5 geschaffen, die zur Durchleitung eines Kühlfluids bestimmt und eingerichtet sind. Des Weiteren werden mehrere Versteifungsausformungen 6 geschaffen, die im Betrieb nicht von Kühlfluid durchströmt werden. Die Versteifungsausformungen 6 erhöhen die Formstabilität und Bauteilsteifigkeit.

Das Formlötwerkzeug wird nach Abschluss des Formlötvorgangs geöffnet, wobei das Unterwerkzeug und das Oberwerkzeug relativ zueinander verlagert und auseinander bewegt werden. Der gefügte warme Plattenkörper 2 bzw. die Kühlplatte 1 kann nach dem Öffnen des Formlötwerkzeugs aus diesem entnommen werden. Vor der Entnahme kann die Kühlplatte 1 im Formlötwerkzeug gehalten und abgekühlt werden. Die Abkühlung erfolgt vorzugsweise bis unterhalb der Schmelztemperatur des Lotwerkstoffs.

Der Plattenstapel wird bei der Herstellung der Kühlplatten zwischen Unterwerkzeug und dem Oberwerkzeug eingespannt. Bei der innendrucktechnischen Umformung und Ausbildung des Kanals 11 und der fluiddichten Trennung des Kanals 11 in einen Kühlkanal 5 und Versteifungsausformungen 6, insbesondere einer Versteifungssicke, wird der Plattenstapel umlaufend entlang aneinander liegender Randbereiche und/oder benachbart zu der Kanalkavität abgedichtet. Die Abdichtung kann durch im Unterwerkzeug und/oder im Oberwerkzeug vorgesehene Druckelemente bewirkt oder unterstützt werden. Solche Druckelemente sind optional und können auch im Bereich von Anschlussstutzen vorgesehen sein. Die Druckelemente können durch eine entsprechende Konturgebung in den Formabschnitten des Unterwerkzeugs und/oder des Oberwerkzeugs ausgebildet sein, beispielsweise durch Abdichtsicken. Die Dichtelemente können umlaufend entlang aneinander liegender Randbereiche von Oberwerkzeug und/oder Unterwerkzeug vorgesehen sein. Die Dichtelemente können auch benachbart zu der Kanalkavität vorgesehen sein. Die Dichtelemente gewährleisten einen besonders vorteilhaften Umformvorgang, insbesondere, dass der Umformvorgang im Bereich der Kanalkavität stattfindet. Auf diese Weise ist eine hohe Maßhaltigkeit und Umformgenauigkeit sichergestellt.

### Bezugszeichen:

- 1 -: Kühlplatte
- 2 -: Plattenkörper
- 3 -: Plattenelement
- 4 -: Plattenelement
- 5 -: Kühlkanal
- 6 -: Versteifungsausformung
- 7 -: Kanalabschnitt
- 8 -: Verschlusselement
- 9 -: Presslötfügung
- 10 -: Öffnung
- 11 -: Kanal

## Patentansprüche

1. Kühlplatte (1) zur Batteriekühlung mit einem Plattenkörper (2), welcher aus zwei löttechnisch miteinander gefügten Plattenelementen (3, 4) gebildet ist und zumindest einen Kühlkanal (5) zur Durchleitung eines Kühlfluids sowie eine Versteifungsausformung (6) aufweist, **dadurch gekennzeichnet, dass** ein Kanalabschnitt (7) zwischen dem Kühlkanal (5) und der Versteifungsausformung (6) durch ein Verschlusselement (8) fluiddicht verschlossen ist.

2. Kühlplatte nach Anspruch 1, **dadurch gekennzeichnet, dass** das Verschlusselement (8) durch eine Fügung, insbesondere eine Presslötfügung (9), gebildet ist.

3. Kühlplatte nach Anspruch 1 oder 2, **dadurch gekennzeichnet, dass** die Versteifungsausformung (6) durch eine rinnen- oder sickenförmige Ausformung in zumindest einem Plattenelement (3, 4) gebildet ist.

4. Kühlplatte nach einem der Ansprüche 1 bis 3, **dadurch gekennzeichnet, dass** die Versteifungsausformung (6) eine Öffnung (10) aufweist.

5. Kühlplatte nach einem der Ansprüche 1 bis 4, **dadurch gekennzeichnet, dass** der Kühlkanal (5) und die Versteifungsausformung (6) innenhochdrucktechnisch ausgebildet sind.

6. Verfahren zur Herstellung einer Kühlplatte (1), **gekennzeichnet durch** folgende Schritte:
- Bereitstellen eines Plattenstapels, welcher aus zumindest zwei Plattenelementen (3, 4) aus einem metallischen Werkstoff mit einem zwischen den Plattenelementen (3, 4) angeordneten Lotwerkstoff gebildet wird;
- Einlegen des Plattenstapels in ein beheiztes Formlötwerkzeug, welches ein Unterwerkzeug und ein Oberwerkzeug aufweist;
- Zufahren des Formwerkzeugs, wobei das Unterwerkzeug und das Oberwerkzeug relativ auf einander zu verlagert werden;
- Schließen des Formlötwerkzeus und Einklemmen des Plattenstapels zwischen dem Unterwerkzeug und dem Oberwerkzeug;
- Aufheizen des Plattenstapels;
- Beaufschlagung eines Zwischenraums zwischen den Plattenelementen (3, 4) des Plattenstapels mit Innendruck durch Einleiten eines Wirkmediums in den Zwischenraum und Ausbilden eines Kanals (11) in zumindest einem Plattenelement (3, 4);
- Schmelzen des Lotwerkstoffs zwischen den Plattenelementen (3, 4) und löttechnische Fügung der Plattenelemente (3, 4) an in Anlage befindlichen Fügeflächen;
- wobei ein Verschlusselement (8) erzeugt wird, durch welches der Kanal (11) in einen Kühlkanal (5) und eine Versteifungsausformung (6) getrennt wird;
- Öffnen des Formlötwerkzeugs und Entnahme der Kühlplatte (1) aus dem Form lötwerkzeug.

7. Verfahren nach Anspruch 6, **dadurch gekennzeichnet, dass** das Verschlusselement (8) durch eine Presslötfügung (9) im Lötprozess erzeugt wird.

8. Verfahren nach Anspruch 6 oder 7, **dadurch gekennzeichnet, dass** das Verschlusselement (8) in einem Kanalabschnitt (7) des Kanals (11) ausgebildet wird.

9. Verfahren nach einem der Ansprüche 6 bis 8, **dadurch gekennzeichnet, dass** in der Versteifungsausformung (6) eine Öffnung (10) erzeugt wird.

10. Verfahren nach einem der Ansprüche 6 bis 9, **dadurch gekennzeichnet, dass** das Formlötwerkzeug auf eine Werkzeugtemperatur zwischen 540 °C und 670 °C, insbesondere zwischen 550 °C und 640 °C, aufgeheizt wird.

11. Verfahren nach einem der Ansprüche 6 bis 10, **dadurch gekennzeichnet, dass** der Schließvorgang des Formlötwerkzeugs vor Erreichen des Schließposition für eine Haltezeit unterbrochen wird, wobei das Oberwerkzeug und das Unterwerkzeug bei eingelegte Plattenstapel in einem Abstand zueinander positioniert sind und nach der Haltezeit das Formlötwerkzeug geschlossen und der Plattenstapel zwischen dem Unterwerkzeug und dem Oberwerkzeug eingeklemmt wird.
